(19) Europäisches Patentamt
European Patent Office
Office européen des brevets

(11) Publication number: **0 054 392**
**A1**

(12) # EUROPEAN PATENT APPLICATION

(21) Application number: 81305766.8

(22) Date of filing: 07.12.81

(51) Int. Cl.³: C 08 L 67/02

(30) Priority: 08.12.80 JP 173494/80

(43) Date of publication of application: 23.06.82 Bulletin 82/25

(84) Designated Contracting States: BE DE FR GB NL

(71) Applicant: POLYPLASTICS CO. LTD.
30 Azuchimachi 2-chome
Higashi-ku Osaka-shi(JP)

(72) Inventor: Matsuoka, Masatoshi
324 Miyashita
Fuji-shi Shizuoka(JP)

(72) Inventor: Ikenaga, Yukio
324 Miyashita
Fuji-shi Shizuoka(JP)

(72) Inventor: Matsuno, Osami
3-18 Motoyama-Nakamachi 3-chome
Higashinada Oku Kobe Hyogo(JP)

(74) Representative: French, Edward Llewelyn
Hyde, Heide & O'Donnell 2 Serjeants' Inn
London EC4Y 1LL(GB)

(54) **Flame-resistant polyester compositions having good colour-fastness to light.**

(57) Compositions comprising a polyester e.g. a polybutylene or polyethylene terephthalate, and a flame-retardant possess a good colour-fastness to light in addition to being flame-resistant, and which furthermore do not exude the flame-retardant in hot ambient conditions.

The compositions may contain in addition ultra violet stabilizers and antioxidants, and compositions which are reinforced with glass fibres have their physical properties further enhanced by the presence of a phenoxy resin.

EP 0 054 392 A1

Croydon Printing Company Ltd.

# FLAME-RESISTANT POLYESTER COMPOSITIONS HAVING GOOD COLOUR-FASTNESS TO LIGHT

This invention relates to polyester compositions which have flame-resistance combined with colour-fastness to light and which in moulded form do not exude flame retardants in hot ambient conditions.

Polyesters, particularly polyethylene terephthalate and polybutylene terephthalate, possibly when reinforced with inert fillers e.g. glass fibres, are useful as engineering plastics due to their excellent mechanical and electric properties, and chemical and heat resistance. However they are inflammable and it is necessary that they be rendered flame-resistant to be acceptable for industrial use.

A variety of processes have hitherto been proposed for making thermoplastic polyesters flame-resistant. Almost all these processes employ flame retardants possibly with auxiliary agents to make the polyesters flame-resistant. However such compositions have very low colour-fastness to light when used outdoors, which impairs their commercial value of merchandise, and restricts their usefulness for outdoor uses. Also such polyester compositions exude the flame-retardant components when exposed for long periods in hot surroundings. Such properties preclude the use of such polyester compositions as insulators under high voltage conditions.

It has been found according to the present invention that triazine compounds containing bromine atoms have the

property of rendering thermoplastic polyesters flame-resistant, while at the same time providing colour-fastness.

Thus the invention provides a polyester composition containing from 3 to 50% by weight of a cyanuric bromide, based on the weight of polyester.

The colour-fastness of compositions according to the invention may further be improved by incorporating therein one or more ultra-violet stabilizers, e.g. benzophenone, benzotriazole and phenyl salicylate. The colour-fastness of such u.v. stabilized compositions may be yet further improved by the incorporation of one or more conventional antioxidants e.g. hindered phenol, amine and phosphite derivatives.

Polyesters which may be used in the compositions of the invention include one or more polyesters derived from glycols and dicarboxylic acids, e.g. terephthalic acid and isophthalic acid, and alkyl esters thereof. Preferred polyesters are polybutylene terephthalate, and a mixture of polybutylene terephthalate and polyethylene terephthalate.

Cyanuric bromide used as flame retardant in the compositions of the invention preferably comprises one or more cyanuric bromides of the following structure

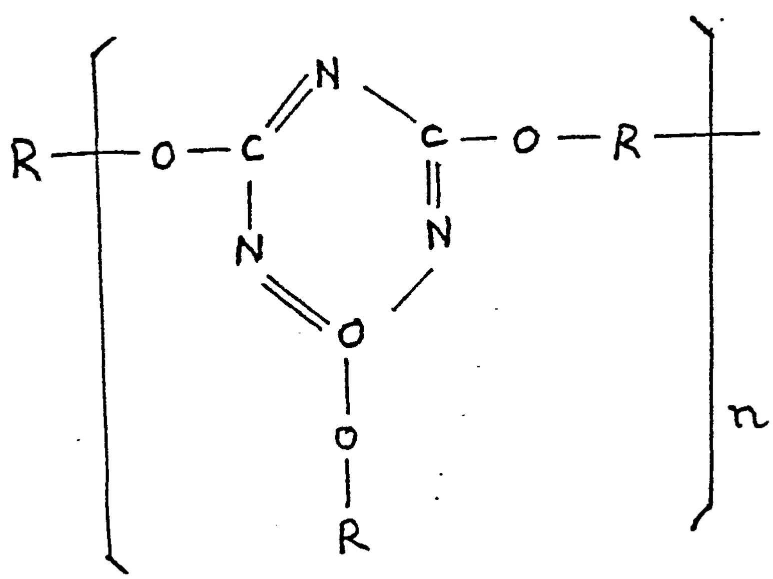

wherein n is an integer representing a degree of polymerization,

R represents -H, $-R_1$, and $-R_2$; with the proviso that at least one R is $R_1$ and wherein -H, -OH, or $R_2$ is attached to one end of the said $R_1$ group

$R_1$ stands for

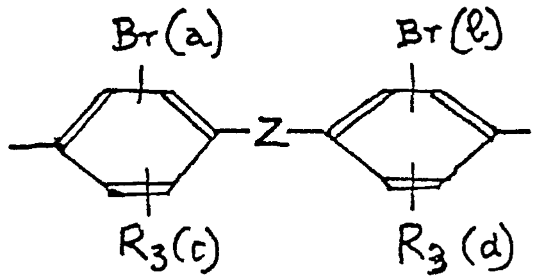

and $R_2$ stands for

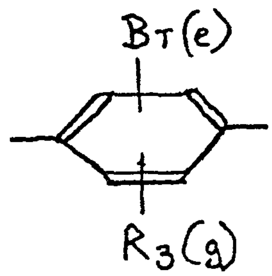

in which a, b, c, d, e and g are positive integers indicative of the number of substituents and comply with the requirements:

$a + b + c + d \leqq 8$, and

$e + g \leqq 5$;

Z stands for alkylidene, alkylene, $-SO_2-$, -SO-, -S-, -O- or may form a bond between two phenylene groups,

$R_3$ represents -H, lower alkyl groups e.g. $C_1$-$C_5$ alkyl groups, and halogenated (preferably Cl or Br) lower alkyl groups.

When R is located at the terminal of the polymer, it may be terminated with H, OH, a halogen e.g. bromine or chlorine or $R_2$ which is terminated with H, OH, a halogen e.g. Br or Cl.

In such flame retardants the presence of bromine atoms enhances the colour-fastness to light of polyester compositions in which they are incorporated according to the invention to a degree above that of chlorine-containing components.

The mechanical properties of polyesters tend to diminish with increasing content of flame retardants, and thus the proportion of flame-retardant present in the compositions of the invention preferably is from 3 to 50% by weight, particularly from 3 to 20% by weight based on the weight of polyester.

Although the flame-retardants can be used alone to provide useful flame-resistance to polyesters, the flame resistance of such compositions is further improved by the presence of auxiliary known flame-retardants, particularly metal-containing compounds for example antimony trioxide or halides, or zinc or bismuth compounds. The proportion of flame-retardant(s) used may be lessened if the compositions of the invention incorporate a filler e.g. glass fibres.

The molecular weight of the flame-retardant used according to the invention may be selected taking into account the kneading and moulding steps to be carried out on the compositions and the final desired physical properties. Usually the average molecular weight of the said flame-retardants is from 3,000 to 8,000.

The invention is hereinafter described in more detail using polybutylene terephthalate (PBT) as an example of a polyester.

In principle the flame-resistance of PBT may be enhanced either by blending with the polyester a flame-retardant or by grafting a flame-retardant molecule into the polymer chain of the polyester.

In the former instance decabromodiphenyl may be added to PBT as described in the published Japanese Patent Application No. 2086/71. Alternatively bromophthalic

acid anhydride, bromodiphenyl, bromodiphenyl ether and the like are added to fibreglass reinforced PBT (as described in published Japanese Patent Application No. 12413/73). Thus bromoterephthalic acid may be reacted with PBT (as described in published Japanese Patent Application No. 133253/75).

However parts made of PBT for outdoor use, e.g. for automobiles and electric appliances, which contain decarbomodiphenyl, may become discoloured and out of harmony with other coloured parts, which detracts from their commercial acceptability.

In contrast however PBT composition containing the flame-retardants of this invention has excellent colour fastness to light.

A PBT composition, conventionally mixed with decarbromodiphenyl and antimony trioxide, which has a degree of flame-resistance V-0 according to UL-94 method, becomes yellowish brown when exposed to the irradiation of "Sun-shine type weather o'meter ($63^{\circ}C$ x 12 min./60 min. water spray) for 200 hours.

A further PBT composition, which has a degree of flame-resistance V-2 according to the said UL-94 method by adding a lesser amount of decabromodiphenyl as flame-retardant while keeping the amount of antimony trioxide (auxiliary agent) constant, shows a small improvement in discolouration but substantial yellowing still occurs. Thus with such flame-retardants colour fastness to light is little improved.

In contrast a PBT composition which has a degree of flame-resistance V-0 according to the said UL-94 method by incorporating flame-retardants according to the invention, shows less discolouration under the same irradiation condition as the above, and provides a significant improvement over that which has hitherto been obtained.

In particular the colour difference ($\Delta$ E) of PBT compositions according to the invention proves to be

smaller than that obtained using conventional flame-retardants. The colour difference ($\Delta E$) can be calculated by Hunter's equation after L, a and B are measured in the chromaticity coordinates.

$$\Delta E = \sqrt{(L-L_0)^2 + (a-a_0)^2 + (b-b_0)^2}$$

where $L_0$, $a_0$, $b_0$ ... values before irradiation of light and
L, a, b....... values after irradiation of light

PBY compositions with V-2 flame-resistance prepared by adding a less amount of the flame-retardants, have a very small colour difference compared with a composition with V-0 flame-resistance and the colour fastness to light is greatly improved.

Thus the flame-retardants used according to the invention can provide superior colour fastness to light without sacrificing significantly their own flame-retarding action.

As hereinbefore described UV stabilizers can be incorporated in the compositions of the invention, whereby the colour fastness to light can be improved. Thus up to 5% by weight, preferably not more than 2% by weight based on the polyester of one or more such UV stabilizers may thus be incorporated, for example of benzophenone, benzotriazole and phenyl salicylate derivatives.

Also as hereinbefore described, one or more antioxidants can be incorporated in the compositions of the invention, for example hindered phenol, amine, phosphite, and other derivatives, in amounts up to 5% by weight, preferably up to 2% by weight, based on the polyester, whereby the colour fastness to light is yet further improved.

In addition to the advantages hereinbefore set forth the polyester compositions of the invention do not exude mixed flame-retardants in hot ambient conditions. By contrast when conventional PBT compositions with V-0 antiflammability (flame-resistance), prepared by adding decabromodiphenyl ether, are held at 60°C for 5 hours, the

flame-retardant exudes from the surface as a whitish deposit, which not only impairs appearance but renders the composition less flame-resistant. Thus PBT compositions of this type are not satisfactory for electric parts to which high voltage is applied. The exuding of flame-retardants occurs due to the poor affinity of PBT with conventional flame-retardants, insufficient dispersion of such flame-retardants in PBT and mis-matching of the molecular weight of the flame-retardants with that of the PBT.

By contrast the polyester compositions of this invention do not ooze flame-retardants after having been kept standing at 140°C for 24 hours. Particularly, the colour fastness to light is strengthened by the synergism brought about from UV stabilizers of benzotriazole type and antioxidents of hindered phenol type added. However, the colour fastness to light is not improved in the PBT compositions blended with conventional flame-retardants even though these UV stabilizers and antioxidants are incorporated.

Additionally, the polyester compositions of this invention are superior to conventional ones in their thermal properties, that is the polyester compositions which have approximately the same degree of flame-resistance to conventional compositions with V-O antiflammability containing decabromodiphenyl ether, deform at a temperature higher than the conventional compositions, the temperature of deformation being measured by applying a pressure of 18.6 $kg/cm^2$ according to D 618 A method.

Thus the polyester compositions of the invention are more suitable for uses in which heat and load are applied.

If desired, reinforcing materials can be incorporated in the polyester compositions of the invention, either singly or in combination. Examples of reinforcing materials are fibrous materials e.g. glass fibres, carbon fibres,

asbestos and synthetic fibres; microlamellar materials for example glass platelets, mica and talc; granular materials e.g. glass beads, and other materials for example clays, calcium carbonate, carbon, powdered metals and metal compounds. Such materials may be treated with coupling agents before use.

The polyester compositions of the invention may also contain heat stabilizers, pigments, dyestuffs, lubricants, plasticizers, releasing agents, UV stabilizers, nucleus-forming agents, coupling agents, materials to prevent molten polymer materials from dropping when the polymer is set on fire under extreme conditions, and materials to improve the physical and thermal properties over an extended period of time, for example phenoxy resin and other resins. In particular the polyester compositions of the invention have improved long-term mechanical properties by the addition of phenoxy resin, and this effect is particularly pronounced with glass fibre-reinforced polyester compositions with V-0 flame-resistance. Pigments for example titan white can further improve the colour fastness to light of the polyester compositions.

The mixing of the polyester compositions of the invention can be effected in a mechanical blender, and the homogeneously-mixed compositions can be extruded. The temperature of extruder cylinder is generally in the range from 180° to 300°C, preferably in the range from 230° to 270°C when good extrusion is desired.

The determination of the degree of colour fastness to light can be carried out on test pieces made by moulding polyester compositions prepared according to the present invention. The colour of the test pieces was compared one with another by visual inspection after they had been exposed to the weathering in a "Sunshine Super Longlife Weatherometer", marketed by Suga Test Machine Manufacturing Co. Ltd. under the type-name WELL-SUN-HC at 63°C for 12

minutes and for 60 minutes with spraying. The colour difference was determined for each test piece by measuring L, a and B in the Hunter's chromaticity coordinates hereinbefore referred to using a colour difference measuring apparatus employing digital read-out marketed by Nihon Denshoku Kogyo Co. Ltd. under the type-name ND 504 AA.

The flame-resistance of the polyester compositions was determined according to the standard UL-94 used by underwriters. The test pieces were obtained by injection extrusion of length 127 mm, width 13 mm and thickness 0.8 mm.

The present invention will be described in more detail according to the following Examples 1 to 18 and Comparative Examples 1 to 4.

In the Examples cyanuric bromides were used obtained under the Trade Designations AFR 3001-L (Average molecular weight 3000) and AFR 3001-L1 (Average molecular weight 8000) both marketed by Asahi Glass Co. Ltd. and in the Comparative Examples a conventional decabromodiphenyl ether flame-retardant was used. The polyesters used were polybutylene terephthalate and mixtures thereof with polyethylene terephthalate.

The polyester compositions also included other compounds, namely UV stabilizer, 2-(2'-hydroxy-3', 5'-di isoamyl-phenol)benzotriazole; antioxidant, pentaerythrytyl-tetrakis(3-(3,5-d-tertiarybutyl-4 hydroxy-phenol)propionate.

These compositions were pelletized by a 65mm extruder with vent and each kind of pellet was moulded into a test piece by an injection type moulding machine. The properties of the moulded polyester compositions were determined according to the procedures hereinbefore described, and are set forth in Tables 1 to 4.

Table 1

| | Example 1 | Example 2 | Example 3 | Example 4 | Comp Example 1 | Comp Example 2 | Comp Example 3 |
|---|---|---|---|---|---|---|---|
| ° Polybutylene terephthalate wt% | 78.3 | 78.3 | 91.7 | 70.5 | | 81.4 | 90.7 |
| ° Polyethylene terephthalate wt% | | | | 7.8 | 100 | | |
| ° Flame retardant | Asahi Glass AFR 3001-L | Asahi Glass AFR 3001-H | Asahi Glass AFR 3001-H | Asahi Glass AFR 3001-H | | Decabromo-diphenyl-ether | Decabromo-dephenyl-ether |
| Av. mol. weight | 3,000 | 8,000 | 8,000 | 8,000 | | | |
| ° Color fastness to light | | | | | | | |
| Judgement | Slightly discolored | Slightly discolored | Almost unchanged | Slightly discolored | Almost unchanged | Con-siderably discolored | Remarkably discolored |
| ΔE | 11.5 | 11.0 | 7.7 | 12.0 | 7.0 | 43.0 | 34.0 |
| ° Antiflammability (UL-94%) | V-0 | V-0 | V-2 | V-0 | | V-0 | V-2 |
| ° Amount of flame retardant wt% | 17.4 | 17.4 | 4.0 | 17.4 | | 13.9 | 5.0 |
| ° $SbO_3$ wt% | 4.3 | 4.3 | 4.3 | 4.3 | | 4.7 | 4.3 |

Table 2

| | Example 5 | Example 6 | Example 7 | Example 8 | Example 9 | Comp Example 4 | Comp Example 5 | Comp Example 6 | Comp Example 7 |
|---|---|---|---|---|---|---|---|---|---|
| ° Polybutylene terephthalate wt% | 77.3 | 77.3 | 77.6 | 78.0 | 69.6 | 99.0 | 99.3 | 80.4 | 80.4 |
| ° Polyethylene terephthalate wt% | | | | | 7.7 | | | | |
| ° Flame retardant | Asahi Glass AFR 3001-L | Asahi Glass AFR 3001-H | Asahi Glass AFR 3001-H | Asahi Glass AFR 3001-H | Asahi Glass AFR 3001-H | | | Decabromo-diphenyl-ether | Decabromo-dephenyl-ether |
| ° Av. mol. weight | 3,000 | 8,000 | 8,000 | 8,000 | 8,000 | | | | |
| ° Color fastness to light | | | | | | | | | |
| Judgement | Almost unchanged | Almost unchanged | Almost unchanged | Almost unchanged | Almost unchanged | Almost unchanged | Almost unchanged | Consider-ably di-discolored | Consider-ably discolored |
| ΔE | 6.0 | 5.9 | 7.2 | 7.5 | 6.5 | 6.5 | 6.8 | 36.6 | 38.3 |
| ° Antiflammability (UL-94 method) | V-0 | V-0 | V-0 | V-0 | V-0 | | | V-0 | V-0 |
| ° Amount of flame retardant wt% | 17.4 | 17.4 | 17.4 | 17.4 | 17.4 | | | 13.9 | 13.9 |
| ° $SbO_3$ wt% | 4.3 | 4.3 | 4.3 | 4.3 | 4.3 | | | 4.7 | 4.7 |
| ° Amount of UV stabilizer | 0.7 | 0.7 | 0.7 | | 0.7 | 0.7 | 0.7 | 0.7 | 0.7 |
| ° Amount of anti-oxidant | 0.3 | 0.3 | | 0.3 | 0.3 | 0.3 | | 0.3 | |

Table 3

| | Test standard | Example 2 | Example 10 | Comp. example 2 | Comp example 8 |
|---|---|---|---|---|---|
| ∘ Tensile strength ($kg/cm^2$) | D-638 | 615 | 1420 | 603 | 1405 |
| ∘ Breaking elongation (%) | | 3.0 | 1.8 | 2.6 | 1.8 |
| ∘ Izod impact strength (kg.cm/cm) | D-256 | | | | |
| notched | | 2.7 | 8.5 | 2.9 | 8.0 |
| Unnotched | | 32.9 | 68.1 | 32.9 | 66.8 |
| ∘ Deformation temperature (°C) | D-648 | | | | |
| $18.6kg/cm^2$ | | 70.1 | 211 | 57 | 211 |
| ∘ Antiflammability | UL-94 | V-0 | V-0 | V-0 | V-0 |
| ∘ Exuding | | | | | |
| at 140°C for 66 hours | | no | no | yes | yes |

Table 4

| | Example 10 | Example 11 | Example 12 | Example 13 | Example 14 | Example 15 | Example 16 | Example 17 | Example 18 | Comp Example 8 |
|---|---|---|---|---|---|---|---|---|---|---|
| Resin | Polybutylene terephathalate | | | | | | | | Polybutylene terephthalate + polyethylene terephthalate | Polybutylene terephthalate |
| ° Flame retardant | Asahi Glass, AFR 3001-H (average molecular weight 8,000) | | | | | | | | | Decabromo diphenyl ether |
| ° Color difference (ΔE) | 11.9 | 9.8 | 13.5 | 8.6 | 12.2 | 12.2 | 8.0 | 11.9 | 12.5 | 30.0 |
| ° Additives wt% | | | | | | | | | | |
| Fiberglass | 30 | 15 | 15 | | | | 15 | 30 | 30 | 30 |
| Glass flake | | 15 | | 40 | | 15 | | | | |
| Mica | | | 15 | | | | | | | |
| Beads | | | | | 30 | 15 | | | | |
| Talc | | | | | | | 15 | | | |
| Phenoxy resin | | | | | | | | 1 | | |

* Resin: Polybutylene terephthalate (90) + polyethylene terephthalate (10)

The following further Example 19 is provided.

Test pieces of two polyester compositions were tested, the first composed of the polybutylene terephthalate(used in Example 5) and blended with glass fibres and phenoxy resin (Example 19) and the other composed of the formulation of Example 5. The tensile strength of the test pieces was measured in an oven at 195°C after various times.

The time that the initial tensile strength decreased to half of its initial value was 380 hours for the test piece of Example 19, whereas it was 300 hours for the test piece of Example 5.

## CLAIMS

1. A composition comprising a polyester and a flame-retardant, characterised in that the said flame-retardant is a cyanuric bromide, present in an amount from 3 to 50% by weight, based on the said polyester.

2. A composition as claimed in Claim 1, which contains not more than 5% by weight based on the said polyester, of one or more ultra violet stabilizers.

3. A composition as claimed in Claim 1 or Claim 2, which contains not more than 5% by weight based on the said polyester, of one or more antioxidants.

4. A composition as claimed in any of Claims 1 to 3, wherein the said flame-retardant is according to the formula

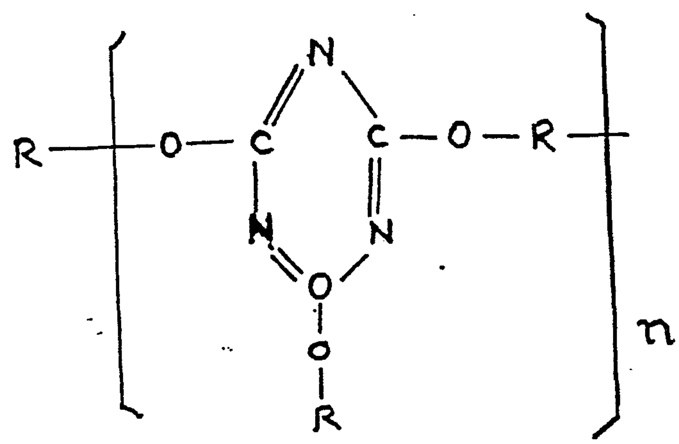

wherein n is an integer representing a degree of polymerization,

R represents -H, $-R_1$, and $-R_2$; with the proviso that at least one R is $R_1$ and wherein -H, -OH, or $R_2$ is attached to one end of the said $R_1$ group

$R_1$ stands for

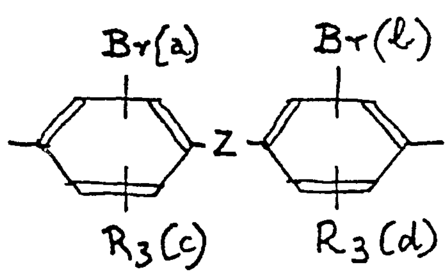

and $R_2$ stands for

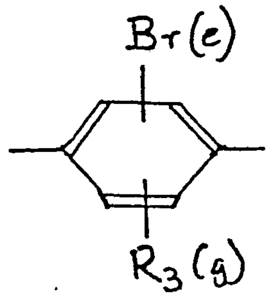

in which a, b, c, d, e and g are positive integers indicative of the number of substituents and comply with the requirements:

$$a + b + c + d \leqq 8, \text{ and}$$

$$e + g \leqq 5;$$

Z stands for alkylidene, alkylene, $-SO_2-$, -SO-, -S-, -O- or may form a bond between two phenylene groups, $R_3$ represents -H, lower alkyl groups, e.g. $C_1-C_5$ alkyl groups, and halogenated (preferably Cl or Br) lower alkyl groups.

5. A composition according to Claim 4, wherein the said flame-retardant has an average molecular weight of from 3,000 to 8,000.

6. A composition according to any of Claims 2 to 5, which contains an ultra violet stabilizer of the benzotriazole type and an antioxidant of the hindered phenol type.

7. A composition according to any of Claims 1 to 6, which in reinforced with glass fibres and which contains a phenoxy resin.

0054392

European Patent Office

# EUROPEAN SEARCH REPORT

Application number
EP 81 30 5766

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | RESEARCH DISCLOSURE, no. 15143 November 1976, Industrial Opportunities Ltd. HOMEWELL, HAVANT/Hampshire (GB) "Polymeric flame retardant additives"<br>* pages 53,54 *<br>-- | 1,4,5 | C 08 L 67/02 |
| X | US - A - 3 962 174 (FRANK M. BERARDINELLI)<br>* claim 1 *<br>------- | 7 | TECHNICAL FIELDS SEARCHED (Int.Cl. 3)<br>C 08 L 67/02 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 09-03-1982 | DECOCKER |